(19) Europäisches Patentamt
European Patent Office
Office européen des brevets

(11) **EP 2 368 318 B1**

(12) **FASCICULE DE BREVET EUROPEEN**

(45) Date de publication et mention de la délivrance du brevet:
**21.01.2015 Bulletin 2015/04**

(21) Numéro de dépôt: **09796736.8**

(22) Date de dépôt: **22.12.2009**

(51) Int Cl.:
*H02P 7/285* (2006.01)   *H02P 23/14* (2006.01)
*H02P 6/06* (2006.01)   *H02P 6/16* (2006.01)

(86) Numéro de dépôt international:
**PCT/EP2009/067788**

(87) Numéro de publication internationale:
**WO 2010/072782 (01.07.2010 Gazette 2010/26)**

(54) **SYSTEME DE COMMANDE D'UN ACTIONNEUR A MOTEUR A COURANT CONTINU ET A ENCOCHES DROITES**

SYSTEM ZUR STEUERUNG EINES STELLGLIEDES MIT EINEM GLEICHSTROMMOTOR UND GERADEN AUSSPARUNGEN

SYSTEM FOR CONTROLLING AN ACTUATOR WITH A DIRECT CURRENT MOTOR AND STRAIGHT RECESSES

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **23.12.2008 FR 0807396**

(43) Date de publication de la demande:
**28.09.2011 Bulletin 2011/39**

(73) Titulaire: **THALES**
**92526 Neuilly sur Seine (FR)**

(72) Inventeurs:
• **LEBRUN, Jean-Louis**
  **F-92160 Antony (FR)**
• **SAHLIGER, Frédéric**
  **F-94117 Arcueil Cedex (FR)**

(74) Mandataire: **Brunelli, Gérald**
**Marks & Clerk France**
**Immeuble Visium**
**22, avenue Aristide Briand**
**94117 Arcueil Cedex (FR)**

(56) Documents cités:
**EP-A- 0 201 605   JP-A- 2004 173 410
US-A- 5 637 969**

## Description

La présente invention porte sur un système de commande d'un actionneur à moteur courant continu et à encoches droites, avec ou sans balais.

Une caractéristique bien connue d'un actionneur à moteur courant continu et à encoches droites, avec ou sans balais, est de se bloquer quasiment instantanément, en cas de panne d'alimentation. Cette particularité est très intéressante, en particulier pour le domaine de l'aéronautique, dans lequel la sécurité de fonctionnement d'un actionneur revêt une importance particulière, par exemple en cas de panne de l'électronique associée.

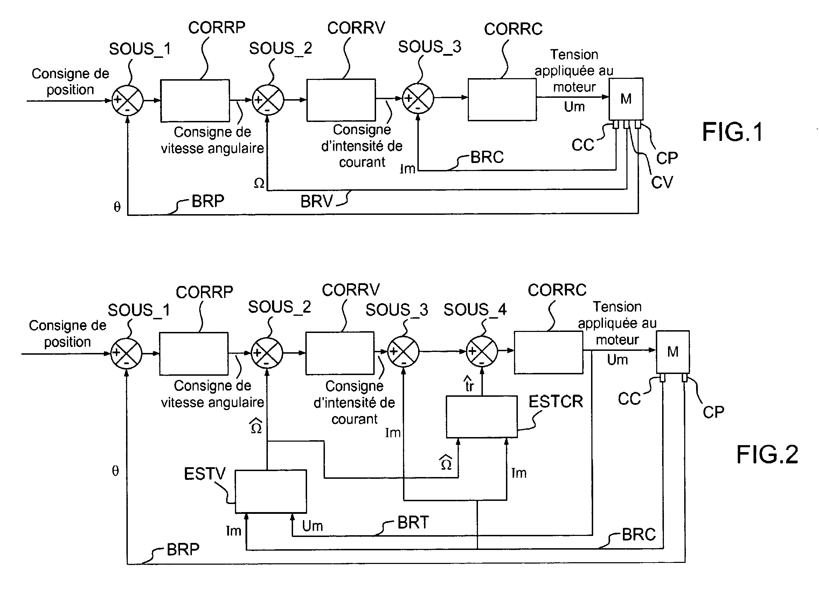

Il est connu, tel qu'illustré sur la figure 1 et du document JP 2004 173410, des systèmes de commande d'actionneurs à moteur à courant continu et à encoches droites, mettant en oeuvre un asservissement au moyen de 3 boucles de rétroaction, en position angulaire du moteur, en vitesse angulaire de rotation, et en intensité de courant, la position angulaire et l'intensité de courant étant mesurées par des capteurs. Sur l'exemple de la figure 1, le système comprend 3 capteurs de mesures, un capteur CP de mesure de position angulaire du moteur M, un capteur CV de mesure de la vitesse angulaire de rotation du moteur M, et un capteur CC de mesure de l'intensité du courant électrique dans le moteur M. Ces trois capteurs permettent de transmettre respectivement leurs mesures par trois boucles de rétroaction respectives, une boucle de rétroaction de position BRP, une boucle de rétroaction de vitesse BRV, et une boucle de rétroaction de courant BRC.

La consigne de base élaborée est une consigne de position du moteur M. A celle-ci est retranchée, par un premier soustracteur SOUS_1, la mesure θ transmise par le capteur de position CP par l'intermédiaire de la boucle de rétroaction de position BRP, et le résultat est transmis à un correcteur de position angulaire du moteur CORRP, de type connu, qui délivre en sortie une consigne de vitesse angulaire de rotation du moteur. A cette consigne de vitesse angulaire de rotation, est soustraite, par un deuxième soustracteur SOUS_2, la mesure Ω transmise par le capteur de vitesse angulaire de rotation CV par l'intermédiaire de la boucle de rétroaction de vitesse BRV, et le résultat est transmis à un correcteur de vitesse angulaire de rotation du moteur CORRV, de type connu, qui délivre en sortie une consigne d'intensité de courant dans le moteur. A cette consigne d'intensité de courant dans le moteur, est soustrait, par un troisième soustracteur SOUS_3, la mesure Im transmise par le capteur de courant CC par l'intermédiaire de la boucle de rétroaction de courant, et le résultat est transmis à un correcteur de courant du moteur CORRC, connu, et par exemple décrit dans le document ... (citer un document publié décrivant un exemple de réalisation), qui délivre en sortie une tension électrique Um appliquée au moteur M.

Le coût des capteurs est élevé dans un tel système d'asservissement, et notamment le coût du capteur CV de mesure de la vitesse angulaire de rotation Ω du moteur M.

Un but de l'invention est de réduire le coût de réalisation d'un tel asservissement.

Un autre but de l'invention est d'améliorer la sécurité de fonctionnement d'un tel asservissement.

Aussi, selon un aspect de l'invention, il est proposé un Système de commande d'un actionneur à moteur à courant continu et à encoches droites comprenant :

- un capteur de position pour mesurer la position angulaire du moteur,

- un capteur de courant pour mesurer l'intensité du courant électrique dans le moteur,

- un correcteur de position angulaire du moteur recevant en entrée la différence entre une position angulaire de consigne et une position angulaire mesurée par le capteur de position transmise par une boucle de rétroaction de position, et délivrant en sortie une consigne de vitesse angulaire de rotation du moteur,

- un correcteur de vitesse angulaire de rotation du moteur, recevant en entrée la différence entre la consigne de vitesse angulaire délivrée par le correcteur de position angulaire et une vitesse angulaire estimée de rotation du moteur, et délivrant en sortie une consigne d'intensité de courant dans le moteur, et

- un correcteur d'intensité de courant dans le moteur, recevant en entrée la différence entre, la différence entre la consigne d'intensité de courant délivrée par le correcteur de vitesse angulaire et une intensité de courant dans le moteur mesurée par le capteur de courant transmise par une boucle de rétroaction de courant, et une intensité estimée de courant résistant équivalente à un couple résistant et délivrant en sortie une tension électrique appliquée au moteur.

En outre, le système comprend un premier estimateur de ladite vitesse angulaire de rotation du moteur recevant en entrée ladite intensité de courant mesurée dans le moteur et ladite tension électrique appliquée au moteur par une boucle de rétroaction de tension, et un deuxième estimateur de ladite intensité de courant résistant, monté en cascade avec ledit premier estimateur, et recevant en entrée ladite vitesse angulaire estimée par le premier estimateur et ladite intensité de courant mesurée du moteur.

On obtient ainsi un asservissement de l'actionneur à coût réduit, en évitant la présence d'un capteur onéreux de mesure de la vitesse angulaire de rotation du moteur.

En outre, la disposition en cascade des deux estimateurs, permet d'obtenir toutes les informations nécessaires pour utiliser le principe de l'asservissement classique tel qu'illustré par exemple sur la figure 1.

Selon un mode de réalisation, ledit premier estimateur est adapté pour estimer ladite vitesse angulaire de rotation du moteur à partir d'un rapport de proportionnalité de la force contre-électromotrice du moteur calculée à partir d'une équation électromotrice représentative du fonctionnement du moteur.

Ainsi, on obtient une estimation cohérente de la vitesse angulaire de rotation du moteur à partir de signaux accessibles, tels la tension mesurée et le courant mesuré.

Par exemple, ledit premier estimateur comprend un premier régulateur proportionnel intégral, un premier filtre de bande passante, et un premier module de calcul proportionnel.

Dans un mode de réalisation, ledit deuxième estimateur est adapté pour estimer ladite intensité de courant résistant à partir du couple résistant dont elle est représentative calculé à partir d'une équation mécanique représentative du fonctionnement du moteur.

Ainsi, on obtient une estimation cohérente du couple résistant équivalent.

Par exemple, ledit deuxième estimateur comprend un deuxième régulateur proportionnel intégral, un deuxième filtre de bande passante, et un deuxième module de calcul proportionnel.

Un tel mode de réalisation permet une implémentation aisée dans des FPGA, et une robustesse élevée de la boucle vis-à-vis des erreurs sur les paramètres du moteur.

Selon un mode de réalisation, ledit capteur de position comprend au moins un capteur à effet Hall.

Système selon l'une des revendications précédentes, dans lequel ledit capteur de courant est un capteur à résistances en parallèle, ou un capteur à effet Hall.

L'invention sera mieux comprise à l'étude de quelques modes de réalisation décrits à titre d'exemples nullement limitatifs et illustrés par les dessins annexés sur lesquels :

- la figure 1 illustre un système de commande d'un actionneur à moteur à courant continu et à encoches droites de l'état de la technique ;
- la figure 2 illustre un système de commande d'un actionneur à moteur à courant continu et à encoches droites, selon un aspect de l'invention ;
- la figure 3 illustre, un exemple de réalisation du premier estimateur de la vitesse angulaire de rotation du moteur de la figure 2 ;
- la figure 4 illustre, un exemple de réalisation du deuxième estimateur de l'intensité de courant résistant du moteur de la figure 2 ;
- la figure 5 illustre, un exemple de rapport entre l'intensité de courant résistant estimé et la vitesse estimée.

Sur l'ensemble des figures, les éléments ayants les mêmes références sont similaires.

Tel qu'illustré sur la figure 2, un système de commande d'un actionneur à moteur M à courant continu et à encoches droites, mettant en oeuvre un asservissement au moyen de 3 boucles de rétroaction, en position angulaire θ du moteur M, en intensité de courant Im du moteur M, et en tension électrique Um appliquée au moteur M ; la position angulaire θ et l'intensité de courant Im du moteur M étant respectivement mesurées par un capteur CP de mesure de position angulaire θ du moteur M, et un capteur CC de mesure de l'intensité Im du courant électrique dans le moteur M. Ces deux capteurs permettent de transmettre respectivement leurs mesures par deux boucles de rétroaction respectives, une boucle de rétroaction de position BRP, et une boucle de rétroaction de courant BRC.

La consigne de base élaborée est une consigne de position du moteur M. A celle-ci est retranchée, par un premier soustracteur SOUS_1, la mesure θ transmise par le capteur de position CP par l'intermédiaire de la boucle de rétroaction de position BRP, et le résultat est transmis à un correcteur de position angulaire du moteur CORRP qui délivre en sortie une consigne de vitesse angulaire de rotation du moteur M. A cette consigne de vitesse angulaire de rotation, est soustrait, par un deuxième soustracteur SOUS_2, une vitesse angulaire $\hat{\Omega}$ de rotation du moteur M estimée par un premier estimateur ESTV, et le résultat est transmis à un correcteur de vitesse angulaire de rotation du moteur CORRV, qui délivre en sortie une consigne d'intensité de courant dans le moteur M. A cette consigne d'intensité de courant dans le moteur M, est soustrait, par un troisième soustracteur SOUS_3, la mesure Im de courant du moteur M transmise par le capteur de courant CC par l'intermédiaire de la boucle de rétroaction de courant BRC. En outre, est soustrait, par un quatrième soustracteur SOUS_4, une intensité $\hat{Ir}$ de courant résistant équivalente à un couple résistant, estimée par un deuxième estimateur ESTCR et le résultat est transmis à un correcteur de courant du moteur CORRC, qui délivre en sortie une tension électrique Um appliquée au moteur M.

Le premier estimateur ESTV de la vitesse angulaire de rotation $\hat{\Omega}$ du moteur M reçoit en entrée l'intensité de courant Im mesurée par la capteur de courant CC dans le moteur M, et la tension électrique Um appliquée au moteur M par une boucle de rétroaction de tension BRT.

Le deuxième estimateur ESTCR est monté en cascade avec ledit premier estimateur ESTV, et reçoit en entrée la vitesse angulaire $\hat{\Omega}$ de rotation du moteur M estimée par le premier estimateur ESTV et l'intensité de courant Im mesurée dans le moteur M.

Un tel système est dépourvu de capteur de mesure de la vitesse angulaire $\hat{\Omega}$ de rotation du moteur M, ce qui permet d'abaisser sensiblement son coût.

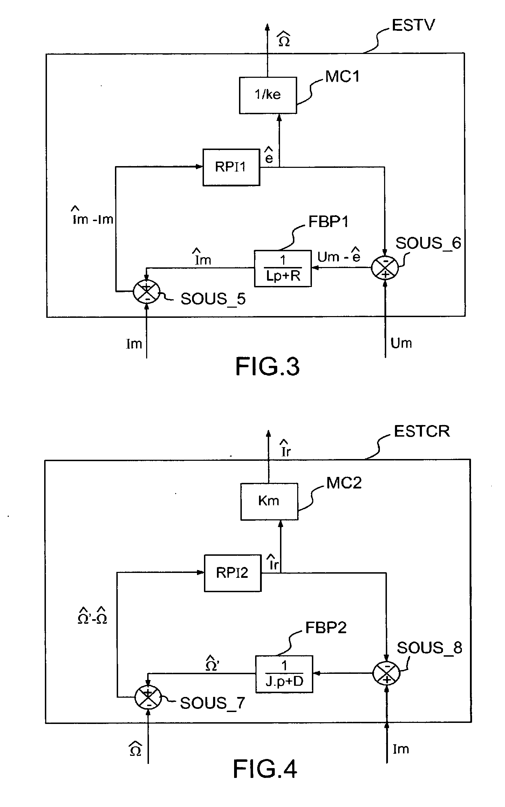

Sur la figure 3, est représenté schématiquement un exemple de réalisation du premier estimateur ESTV. En entrée, il reçoit l'intensité de courant Im mesurée par le capteur de courant CC, et la tension électrique Um appliquée au moteur M.

L'intensité de courant Im est soustraite, par un cinquième soustracteur SOUS_5, à une intensité $\hat{I}m$ de courant dans le moteur M, estimée localement et transmise par un premier filtre passe-bande FBP1. La différence entre l'intensité de courant estimée $\hat{I}m$ et l'intensité de courant mesurée Im est transmise à un premier régulateur proportionnel intégral RPI1, qui délivre en sortie une force contre-électromotrice estimée ê, à destination d'un premier module de calcul proportionnel MC1, et à destination d'un sixième soustracteur SOUS_6, qui la déduit de la tension électrique Um, et transmet la différence résultante Um-ê au premier filtre passe-bande FPB1. Le premier module de calcul proportionnel, calcule un rapport de proportionnalité de la force contre-électromotrice ê, égal à la vitesse angulaire $\hat{\Omega}$ estimée de rotation du moteur M.

La vitesse angulaire $\hat{\Omega}$ de rotation du moteur M est estimée à partir de l'équation électrique du moteur M :

$$Um = R.\hat{I}m + L.\dot{\hat{I}}m + \hat{e}$$

dans laquelle :

$\hat{e} = Ke.\hat{\Omega}$ ,

Um représente la tension électrique appliqué au moteur M, en V,

$\hat{I}m$ représente l'intensité de courant estimée, en A,

R représente la résistance du moteur M, en $\Omega$,

L représente l'inductance du moteur M, en H,

ê représente la force contre-électromotrice estimée du moteur M, en V,

Ke représente le coefficient de force contre-électromotrice du moteur électrique M, en V/rad/s, et

$\hat{\Omega}$ représente la vitesse angulaire de rotation du moteur M, en rad/s.

En outre, le fonctionnement du premier régulateur proportionnel intégral RPI1 peut être décrit par la relation suivante :

$$\hat{e} = PI1(p).(\hat{I}m(A) - Im(A))$$

dans laquelle :

$$PI1(p) = \frac{K_{I\_\dot{V}}}{p} + K_{P\_\dot{V}} = K_{I\_\dot{V}}.\frac{\frac{K_{P\_\dot{V}}}{K_{I\_\dot{V}}}.p + 1}{p}$$

$K1\_\hat{V}$ représentant le gain intégral, en $V.A^{-1}.rad.s^{-1}$
$KP\_\hat{V}$ représentant le gain proportionnel, en $V.A^{-1}$, et
p représentant la variable de Laplace, en $rad.s^{-1}$.

On peut alors dimensionner le premier régulateur RPI1 de sorte que l'on ait le système suivant :

$$\begin{cases} \dfrac{K_{P\_\dot{V}}}{K_{I\_\dot{V}}} = \dfrac{L}{R} \\[2mm] \tau_{\dot{V}} = \dfrac{R}{K_{I\_\dot{V}}} \end{cases}$$

dans lequel $\tau_{\dot{V}}$ représente une constante de temps de l'estimateur en boucle fermée, en secondes, vérifiant la relation suivante :

$$\frac{\hat{e}}{e} = \frac{1}{\tau_{\dot{V}}.p + 1}$$

e représentant la force contre-électromotrice réelle, en V.

Aussi, le premier module de calcul proportionnel MC1 a un facteur multiplicatif égal à 1/Ke, et le premier filtre à bande passante FBP1 une fonction de transfert égale à $\dfrac{1}{Lp + R}$

Sur la figure 4, est représenté schématiquement un exemple de réalisation du deuxième estimateur ESCR. En entrée, il reçoit l'intensité de courant Im mesurée par le capteur de courant CC, et la vitesse angulaire $\hat{\Omega}$ estimée de rotation du moteur M.

La vitesse angulaire $\hat{\Omega}$ estimée de rotation du moteur M est soustraite, par un septième soustracteur SOUS_7, à une autre vitesse angulaire $\hat{\Omega}'$ de rotation du moteur M, estimée localement et transmise par un deuxième filtre passe-bande FBP2. La différence entre la vitesse angulaire $\hat{\Omega}'$ de rotation du moteur M, estimée localement, et la vitesse angulaire $\hat{\Omega}$ estimée de rotation du moteur M est transmise à un deuxième régulateur proportionnel intégral RPI2, qui délivre en sortie une intensité $\hat{I}'r$ de courant résistant, estimée localement, à destination d'un deuxième module de calcul proportionnel MC2, et à destination d'un septième soustracteur SOUS_7, qui la déduit de l'intensité de courant Im mesurée par le capteur de courant CC, et transmet la différence résultante $\hat{I}'r$-Im au deuxième filtre passe-bande FPB2. Le deuxième module de calcul proportionnel, calcule un rapport de proportionnalité de l'intensité estimée $\hat{I}'r$ de courant résistant, égal à l'intensité estimée $\hat{I}r$ de courant résistant.

L'intensité $\hat{I}r$ de courant résistant, qui n'a pas de réalité physique, est représentative du couple résistant du moteur Tr.

L'intensité estimée $\hat{I}r$ de courant résistant est estimée à partir de l'équation mécanique du moteur :

$$Tm = J.\dot{\Omega}' + D.\Omega' + Tr$$

dans laquelle :

Tm = Km.Im,

$\hat{I}r = km.\hat{I}'r,$

Tm représente le couple du moteur M, en N.m,
Tr représente le couple résistant (somme du couple de détente et du couple extérieur), en N.m,
J représente l'inertie du moteur, en kg.m², 
D représente les frottements visqueux du moteur M, en N.m/rad/s, et
Km représente le coefficient de couple du moteur électrique, en N.m/A.

Le couple de détente, ou couple d'encoche, est un couple d'interaction entre les aimants et les encoches du moteur électrique M, présentant un nombre de périodes égal au nombre d'encoches sur un tour mécanique. Ainsi la fréquence des ondulations du couple de détente dépend de la vitesse angulaire de rotation du moteur M.

En outre, le fonctionnement du deuxième régulateur proportionnel intégral RPI2 peut être décrit par la relation suivante :

$$\hat{I}'r = PI2(p).(\hat{\Omega}' - \hat{\Omega})$$

dans laquelle :

$$PI2(p) = \frac{K_{I\_\hat{I}r}}{p} + K_{P\_\hat{I}r} = K_{I\_\hat{I}r}.\frac{\frac{K_{P\_\hat{I}r}}{K_{I\_\hat{I}r}}.p+1}{p}$$

$K1\_\hat{I}r$ représentant le gain intégral, en V.A$^{-1}$.rad.s$^{-1}$, et
$KP\_\hat{I}r$ représentant le gain proportionnel, en V.A$^{-1}$,

On peut alors dimensionner le deuxième régulateur RPI2 de sorte que l'on ait le système suivant :

$$\begin{cases} \dfrac{K_{P\_\hat{I}r}}{K_{I\_\hat{I}r}} = \dfrac{J}{D} \\ \tau_{\hat{I}r} = \dfrac{D}{Km.K_{I\_\hat{I}r}} \end{cases}$$

Dans lequel $\tau_{\hat{I}r}$ représente une constante de temps de l'estimateur en boucle fermée, en secondes, vérifiant la relation suivante :

$$\frac{\hat{I}r}{Ir} = \frac{1}{\tau_{\hat{I}r}.p+1}$$

Ir représentant la valeur réelle de l'intensité de courant résistant représentative du couple résistant.

Aussi, le deuxième module de calcul proportionnel MC2 a un facteur multiplicatif égal à Km, et le deuxième filtre à bande passante FBP2 une fonction de transfert égale à $\dfrac{1}{Jp+D}$

Le fonctionnement du deuxième estimateur ESTCR, disposé en cascade avec le premier estimateur ESTV, peut également être représenté par la relation suivante :

$$\hat{I}r = \frac{1}{\tau_{Ir}.p+1}.Im + \frac{D}{Km}.\frac{\tau_{MECA}.p+1}{\tau_{Ir}.p+1}.\hat{\Omega}$$

dans laquelle :

$\tau_{MECA}$ représente la constante de temps mécanique du moteur, en secondes,
$\tau_{Ir}$ représente la constante de temps de la boucle fermée du deuxième estimateur ESTCR.

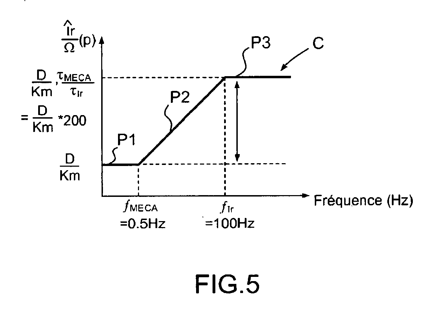

Ainsi, la figure 5 illustre un exemple de la transmission fréquentielle du rapport de l'intensité estimée $\hat{I}r$ de courant résistant et de la vitesse angulaire $\hat{\Omega}$ estimée de rotation du moteur M (courbe C).

Cette courbe C de gain montre que les hautes fréquences (portion P3 de C) de la vitesse angulaire de rotation du moteur M sont amplifiées d'un rapport 200 par rapport aux basses fréquences (portion P1 de C). Ceci est dû au fait que l'on veut observer des fréquences de "couple résistant" allant jusqu'à 100Hz (soit 40Hz sans déphasage) alors que la bande passante mécanique du moteur M est seulement de 0.5Hz.

Or si la vitesse angulaire de rotation $\hat{\Omega}$ est issue d'un premier estimateur ESTV de bande passante finie, de l'ordre de 800Hz dans cet exemple, qui commence donc à déphaser à partir de quelques centaines de Hertz, la compensation du couple résistant sera faussée par ce déphasage et cela peut engendrer une oscillation entretenue sur le mouvement du moteur, c'est pourquoi il convient :

- d'utiliser une information de vitesse angulaire de rotation la plus précise possible, même au-delà 100Hz,
- de limiter la bande passante de la boucle fermée du deuxième estimateur ESTCR en fonction de la qualité de l'information de vitesse angulaire de rotation disponible, et
- de prévoir un filtre de sortie coupant fortement hors de la bande passante de la boucle du deuxième estimateur ESTCR pour garantir que les oscillations à hautes fréquences par réinjection dans une boucle de courant moteur à forte bande passante, de l'ordre de 1000Hz environ, ne perturbent pas le mouvement.

La présente invention permet, à coût sensiblement réduit, d'asservir un actionneur à moteur à courant continu et à encoches droites, en améliorant la sécurité de fonctionnement d'un tel actionneur.

## Revendications

1. Système de commande d'un actionneur à moteur (M) à courant continu et à encoches droites comprenant :

   - un capteur de position (CP) pour mesurer la position angulaire ($\theta$) du moteur (M),
   - un capteur de courant (CC) pour mesurer l'intensité (Im) du courant électrique dans le moteur (M),
   - un correcteur de position angulaire (CORRP) du moteur (M) recevant en entrée la différence entre une position angulaire de consigne et une position angulaire mesurée ($\theta$) par le capteur de position (CP) transmise par une boucle de rétroaction de position (BRP), et délivrant en sortie une consigne de vitesse angulaire de rotation du moteur (M),
   - un correcteur de vitesse angulaire (CORRV) de rotation du moteur (M), recevant en entrée la différence entre la consigne de vitesse' angulaire délivrée par ledit correcteur de position angulaire (CORRP) et une vitesse angulaire estimée ($\hat{\Omega}$) de rotation du moteur (M), et délivrant en sortie une consigne d'intensité de courant dans le moteur (M), et
   - un correcteur d'intensité de courant (CORRC) dans le moteur (M), recevant en entrée la différence entre, la différence entre la consigne d'intensité de courant délivrée par le correcteur de vitesse angulaire (CORRV) et une intensité de courant (Im) dans le moteur (M) mesurée par le capteur de courant (CC) transmise par une boucle de rétroaction de courant (BRC), et une intensité estimée ($\hat{Ir}$) de courant résistant représentative d'un couple résistant et délivrant en sortie une tension électrique (Um) appliquée au moteur (M),

   **caractérisé en ce qu'**il comprend un premier estimateur (ESTV) de ladite vitesse angulaire ($\hat{\Omega}$) de rotation du moteur (M) recevant en entrée ladite intensité de courant mesurée (Im) dans le moteur (M) et ladite tension électrique (Um) appliquée au moteur (M) par une boucle de rétroaction de tension (BRT), et un deuxième estimateur (ESTCR) de ladite intensité ($\hat{Ir}$) de courant résistant, monté en cascade avec ledit premier estimateur (ESTV), et recevant en entrée ladite vitesse angulaire ($\hat{\Omega}$) de rotation du moteur (M) estimée par le premier estimateur (ESTV) et ladite intensité de courant mesurée (Im) du moteur (M).

2. Système selon la revendication 1, dans lequel ledit premier estimateur (ESTV) est adapté pour estimer ladite vitesse angulaire ($\hat{\Omega}$) de rotation du moteur (M) à partir d'un rapport de proportionnalité de la force contre-électromotrice du moteur (M) calculée à partir d'une équation électromotrice représentative du fonctionnement du moteur (M).

3. Système selon la revendication 2, dans lequel ledit premier estimateur (ESTV) comprend un premier régulateur proportionnel intégral (RPI1), un premier filtre de bande passante (FBP1), et un premier moyen de calcul proportionnel (MC1).

4. Système selon l'une des revendication précédentes, dans lequel ledit deuxième estimateur (ESTCR) est adapté pour estimer ladite intensité ($\hat{Ir}$) de courant résistant à partir du couple résistant dont elle est représentative calculé à partir d'une équation mécanique représentative du fonctionnement du moteur (M).

5. Système selon la revendication 4, dans lequel ledit deuxième estimateur (ESTCR) comprend un deuxième régulateur proportionnel intégral (RPI2), un deuxième filtre de bande passante (FBP2), et un deuxième moyen de calcul proportionnel (MC2).

6. Système selon l'une des revendications précédentes, dans lequel ledit capteur de position (CP) comprend au moins un capteur à effet Hall.

7. Système selon l'une des revendications précédentes, dans lequel ledit capteur de courant (CC) est un capteur à résistances en parallèles, ou un capteur à effet Hall.

## Patentansprüche

1. System zur Steuerung eines Stellglieds mit einem Gleichstrommotor (M) und geraden Aussparungen, das umfasst:

   einen Positionssensor (CP) zum Messen der Winkelposition ($\theta$) des Motors (M),
   einen Stromsensor (CC) zum Messen der Stärke (Im) des elektrischen Stroms im Motor (M),
   einen Korrektor der Winkelposition (CORRP) des Motors (M), der als Eingang die Differenz zwischen einer Soll-Winkelposition und einer von dem Positionssensor (CP) gemessenen Winkelposition ($\theta$), die von einer Positionsretroaktionsschleife (BRP) übertragen wird, empfängt und als Ausgang einen Sollwert der Rotations-Winkelgeschwindigkeit des Motors (M) bereitstellt,
   einen Korrektor der Rotations-Winkelgeschwindigkeit (CORRV) des Motors (M), der als Eingang die Differenz zwischen dem Sollwert der Winkelgeschwindigkeit, die von dem Korrektor der Winkelposition (CORRP) bereitgestellt wird, und einer ermittelten Rotations-Winkelgeschwindigkeit ($\hat{\Omega}$) des Motors (M) empfängt und als Ausgang einen Sollwert der Stromstärke im Motor (M) bereitstellt, und

einen Korrektor der Stromstärke (CORRC) im Motor (M), der als Eingang die Differenz zwischen dem Sollwert der Stromstärke, die von dem Korrektor der Winkelgeschwindigkeit (CORRV) bereitgestellt wird, und einer Stromstärke (Im) im Motor (M), gemessen vom Stromsensor (CC), übertragen von einer Stromsreaktionsschleife (BRC), und einer ermittelten Laststromstärke ($\hat{Ir}$), die für ein Lastmoment repräsentativ ist, empfängt und als Ausgang eine auf den Motor (M) wirkende elektrische Spannung (Um) bereitstellt,

**dadurch gekennzeichnet, dass** es einen ersten Schätzer (ESTV) der Rotations-Winkelgeschwindigkeit ($\hat{\Omega}$) des Motors (M), der als Eingang die im Motor (M) gemessene Stromstärke (Im) und die auf den Motor (M) von einer Spannungsretroaktionsschleife (BRT) wirkende elektrische Spannung (Um) empfängt, und einen zweiten Schätzer (ESTCR) der Laststromstärke ($\hat{Ir}$), der mit dem ersten Schätzer (ESTV) in Kaskade montiert ist, und als Eingang die von dem ersten Schätzer (ESTV) ermittelte Rotations-Winkelgeschwindigkeit ($\hat{\Omega}$) des Motors (M) und die gemessene Stromstärke (Im) des Motors (M) empfängt, umfasst.

2. System nach Anspruch 1, wobei der erste Schätzer (ESTV) ausgebildet ist, um die Rotations-Winkelgeschwindigkeit ($\hat{\Omega}$) des Motors (M) ausgehend von einem Proportionalitätsverhältnis der gegenelektromotouschen Kraft des Motors (M), berechnet auf der Basis einer elektromotorischen Gleichung, die für die Funktion des Motors (M) repräsentativ ist, zu bestimmen.

3. System nach Anspruch 2, wobei der erste Schätzer (ESTV) einen ersten Integral-Proportionalregler (RPI1), einen ersten Durchlassbandfilter (FBP1) und ein erstes Proportionalberechnungsmittel (MC1) umfasst.

4. System nach einem der vorangehenden Ansprüche, wobei der zweite Schätzer (ESTCR) ausgebildet ist, um die Laststromstärke ($\hat{Ir}$) auf der Basis des Lastmoments zu bestimmen, für die sie repräsentativ ist, berechnet auf der Basis einer mechanischen Gleichung, die für die Funktion des Motors (M) repräsentativ ist.

5. System nach Anspruch 4, wobei der zweite Schätzer (ESTCR) einen zweiten Integral-Proportionalregler (RPI2), einen zweiten Durchlassbandfilter (FBP2) und ein zweites Proportionalberechnungsmittel (MC2) umfasst.

6. System nach einem der vorangehenden Ansprüche, wobei der Positionssensor (CP) mindestens einen Sensor mit Hall-Effekt umfasst.

7. System nach einem der vorangehenden Ansprüche, wobei der Positionssensor (CP) ein Sensor mit parallelen Widerständen oder ein Sensor mit Hall-Effekt ist.

**Claims**

1. A system for controlling an actuator with a direct current motor (M) and straight recesses, comprising:

a position sensor (CP) for measuring the angular position ($\theta$) of said motor (M);
a current sensor (CC) for measuring the intensity (Im) of the electric current in said motor (M);
a corrector (CORRP) of the angular position of said motor (M) receiving as input the difference between a setpoint angular position and an angular position ($\theta$) measured by said position sensor (CP), transmitted via a position feedback loop (BRP), and delivering as output a setpoint of the angular rotation speed of said motor (M);
a corrector (CORRV) of the angular rotation speed of said motor (M) receiving as input the difference between the angular speed setpoint delivered by said angular position corrector (CORRP) and an estimated angular speed ($\hat{\Omega}$) of rotation of said motor (M), and delivering as output a setpoint of the current intensity in said motor (M); and
a corrector (CORRC) of the current intensity in said motor (M) receiving as input the difference between the current intensity setpoint delivered by said angular speed corrector (CORRV) and a current intensity (Im) in said motor (M) measured by said current sensor (CC), transmitted via a current feedback loop (BRC), and an estimated intensity ($\hat{Ir}$) of resistant current representing a resistant torque and delivering as output an electric voltage (Um) applied to said motor (M),

**characterised in that** it comprises a first estimator (ESTV) of said angular speed ($\hat{\Omega}$) of rotation of said motor (M) receiving as input said current intensity (Im) measured in said motor (M) and said electric voltage (Um) applied to said motor (M) via a voltage feedback loop (BRT), and a second estimator (ESTCR) of said intensity ($\hat{Ir}$) of resistant current, mounted in a cascade-like manner with said first estimator (ESTV), and receiving as input said angular speed ($\hat{\Omega}$) of rotation of said motor (M) estimated by said first estimator (ESTV) and said measured current intensity (Im) of said motor (M).

2. The system according to claim 1, wherein said first estimator (ESTV) is adapted to estimate said angular speed ($\hat{\Omega}$) of rotation of said motor (M) on the basis of a proportionality ratio of the counter-electromotive force of said motor (M) computed on the basis of an electromotive equation representing the operation of said motor (M).

3. The system according to claim 2, wherein said first estimator (ESTV) comprises a first integral proportional controller (RPI1), a first pass-band filter (FBP1) and a first proportional computation means (MC1).

4. The system according to any one of the preceding claims, wherein said second estimator (ESTCR) is adapted to estimate said intensity ($\hat{Ir}$) of resistant current on the basis of the resistant torque that it represents, computed on the basis of a mechanical equation representing the operation of said motor (M).

5. The system according to claim 4, wherein said second estimator (ESTCR) comprises a second integral proportional regulator (RPI2), a second pass-band filter (FBP2) and a second proportional computation means (MC2).

6. The system according to any one of the preceding claims, wherein said position sensor (CP) comprises at least one Hall effect sensor.

7. The system according to any one of the preceding claims, wherein said current sensor (CC) is a sensor with parallel resistors or a Hall effect sensor.

FIG.1

FIG.2

**FIG.3**

**FIG.4**

FIG.5

**EP 2 368 318 B1**

## RÉFÉRENCES CITÉES DANS LA DESCRIPTION

**Documents brevets cités dans la description**

- JP 2004173410 A